# FASCICULE DE BREVET EUROPEEN

(11) **EP 2 567 890 B1**
(45) Date de publication et mention de la délivrance du brevet: **02.04.2014**
(21) Numéro de dépôt: 12182730.7
(22) Date de dépôt: 03.09.2012
(51) Int. Cl.: B64C 1/18, B64C 1/10, B64C 1/06

(54) **Cadre de fuselage d'aéronef**
Rumpfrahmen eines Luftfahrzeugs
Aircraft fuselage frame

(30) Priorité: 08.09.2011 FR 1157971
(43) Date de publication de la demande: 13.03.2013
(73) Titulaire: AIRBUS OPERATIONS (S.A.S), 31060 Toulouse (FR)
(72) Inventeur: Mialhe, Christophe, 81500 Giroussens (FR); Lieven, Patrick, 31620 Fronton (FR); Delahaye, Romain, 31770 Colomiers (FR)
(74) Mandataire: Gicquel, Olivier Yves Gérard

(56) Documents cités:
- DE-A1-102007 030 026
- FR-A1- 2 877 916
- US-A1- 2009 321 569

## Description

La présente invention concerne la réalisation d'un élément de cadre de fuselage d'aéronef.

Sur les avions existants, la zone située entre le plancher passager, la peau avion et les bielles de plancher est nommée triangle.

Dans les avions existants, les traverses plancher, les cadres et les bielles sont des pièces simples assemblées entre elles soit de manière rigide notamment par encastrement, soit de manière souple par des articulations.

La partie du cadre qui se trouve sous la traverse cargo appelée "cadre de fond de barque" comporte un élément de cadre incurvé et une traverse qui sert de support au plancher cargo.

La partie supérieure du cadre comporte elle un élément de cadre incurvé supérieur et une traverse sous laquelle se fixent les coffres à bagage.

La jonction entre ces pièces est réalisée au moyen de vis ou de rivets ou autres moyens de fixation.

L'assemblage de ces éléments entre eux demande beaucoup de temps du fait du nombre important de fixations à installer, notamment entre la traverse plancher et le cadre supérieur.

En particulier, la jonction traverse/cadre doit être réalisée dans une zone où les efforts à faire passer sont relativement importants, c'est à dire pour lesquelles le moment d'encastrement est important. Pour ce faire, les hauteurs des cadres et des traverses sont augmentées localement pour pouvoir implanter toutes les fixations nécessaires à la jonction.

Afin de réduire les coûts de fabrication de pièces de membrure et de simplifier la définition des pièces en contact, les cadres peuvent être réalisés avec des profilés filés, des pièces usinées, des pièces pliées ou des pièces assemblées ensemble pour former les éléments de membrure tels que les cadres.

Conserver une hauteur constante n'est en général pas possible à la jonction avec les traverses du fait du nombre de fixations à implanter. De fait, le coût de la pièce simple augmente.

Le document FR 2 877 916 A1 décrit une réalisation particulière pour laquelle un cadre supérieur comporte des bras de liaison directement avec une traverse de plancher et un cadre inférieur. Le document DE 10 2007 030 026 décrit un cadre de fuselage avec toutes les caractéristiques techniques du préambule de la revendication 1.

Pour des aéronefs de grande taille un tel cadre supérieur est toutefois encombrant et complexe à réaliser.

Parmi les objectifs à la base de la présente invention, on peut noter une réduction des temps et coûts d'assemblage d'un fuselage d'aéronef, une amélioration de la performance de l'avion par une réduction de masse de la structure à iso fonction, une réduction du nombre de pièces constituants l'aéronef et une réduction des coûts de fabrication, les pièces étant plus simples à réaliser.

L'invention a en particulier pour but de simplifier le dessin des pièces constitutives de la zone de triangle, des zones cadre de fond de barque et de la partie supérieure du cadre.

Pour ce faire la présente invention propose un élément de cadre de fuselage d'aéronef qui comporte une partie de traverse et un tronçon de cadre réunis dans une seule et même pièce, comme défini par la revendication 1.

Selon un premier mode de réalisation, l'élément de cadre de fuselage d'aéronef est constitué d'une pièce métallique.

L'élément de cadre est avantageusement constitué d'une pièce usinée.

Selon un second mode de réalisation, l'élément de cadre est constitué d'une pièce intégrale en matériaux composites.

L'élément de cadre comporte avantageusement une partie de traverse, un tronçon de cadre et au moins une bielle, la partie de traverse, le tronçon de cadre et la bielle étant réunis dans une seule et même pièce formant un triangle intégral.

L'élément de cadre comporte alors des parties de jonction aux angles du profil général triangulaire.

Les parties de jonction étant des zones d'efforts moindres, la hauteur du profil de ces parties reste constante par rapport aux segments reliant les parties de jonctions.

Le triangle intégral comporte avantageusement un segment courbe en sorte d'épouser la courbure de la peau de l'aéronef.

Selon un mode de réalisation alternatif, le tronçon de cadre est un tronçon incurvé supérieur ou inférieur du cadre de l'aéronef.

L'élément de cadre peut alors comporter au moins une bielle reliant le tronçon incurvé supérieur ou inférieur du cadre de l'aéronef et la traverse.

L'invention concerne en outre un ensemble cadre de fuselage d'aéronef et traverses comportant un élément de cadre selon l'invention pour lequel l'élément de cadre relie un cadre supérieur, une traverse plancher et un cadre inférieur, et comporte un segment remplaçant une bielle plancher.

L'un au moins de la traverse plancher, le cadre inférieur et le cadre supérieur est avantageusement de hauteur constante sans renflements au niveau de ses jonctions avec l'élément adjacent.

L'invention concerne en outre un ensemble cadre de fuselage d'aéronef et traverses comportant un élément de cadre selon le mode de réalisation alternatif de réalisation de l'élément de cadre de l'invention, pour lequel la partie de traverse de l'élément de cadre forme une traverse cargo de l'aéronef ou forme une traverse support de coffres à bagage.

L'invention s'applique à un aéronef comportant au moins un ensemble cadre de fuselage d'aéronef et traverses selon l'invention.

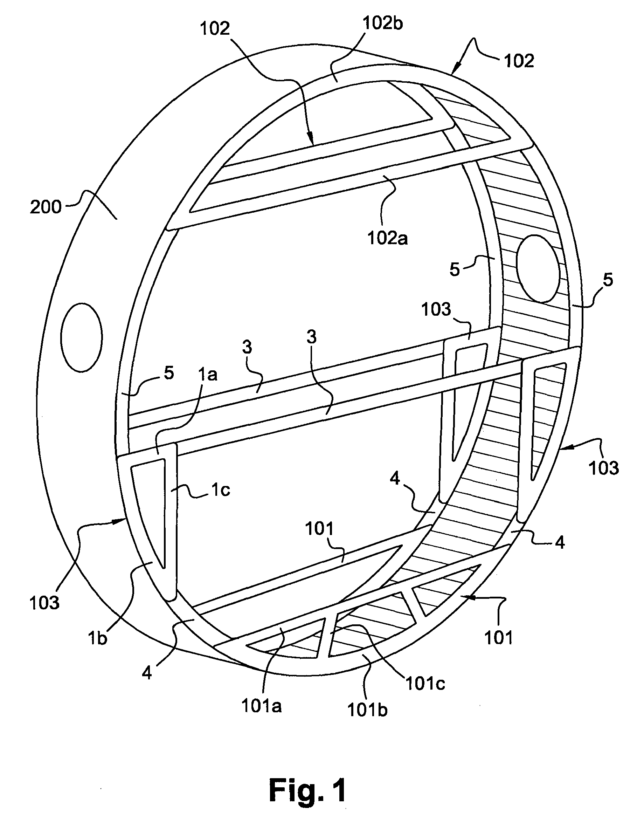

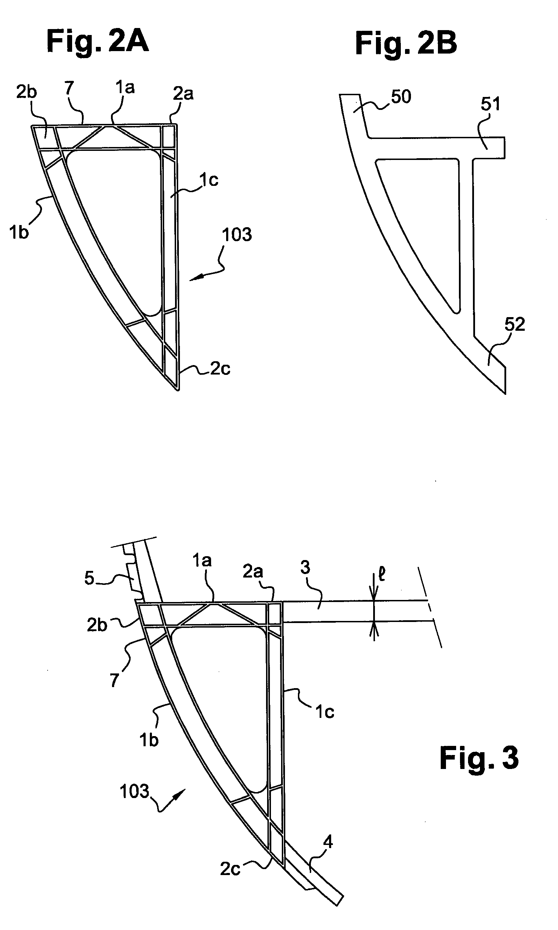

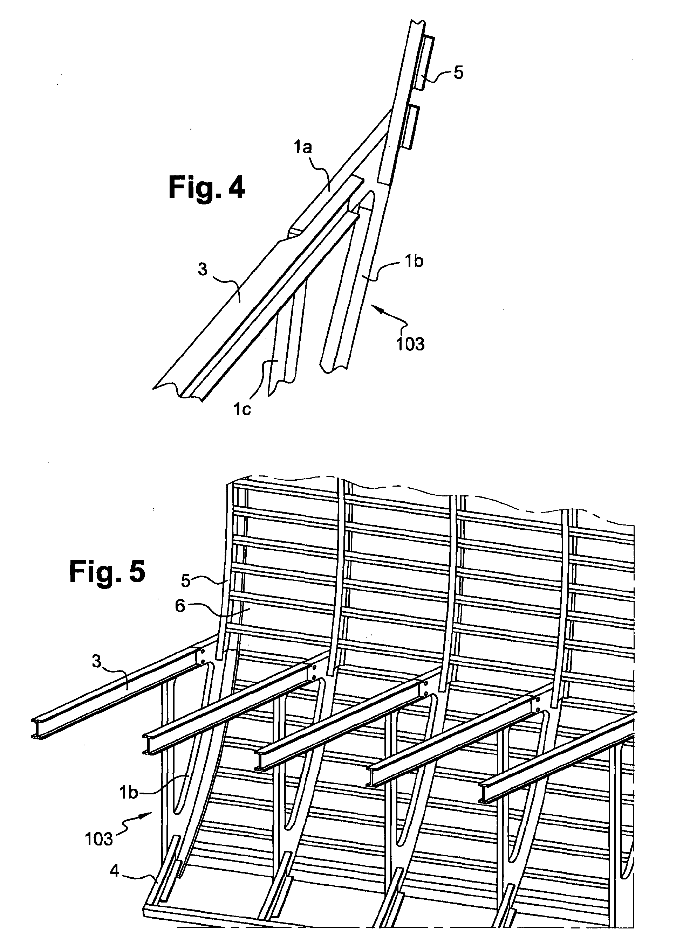

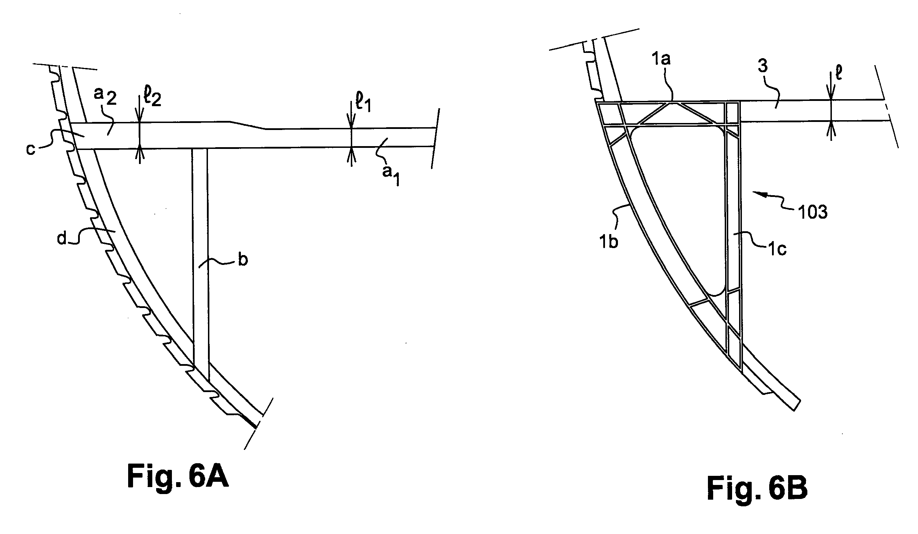

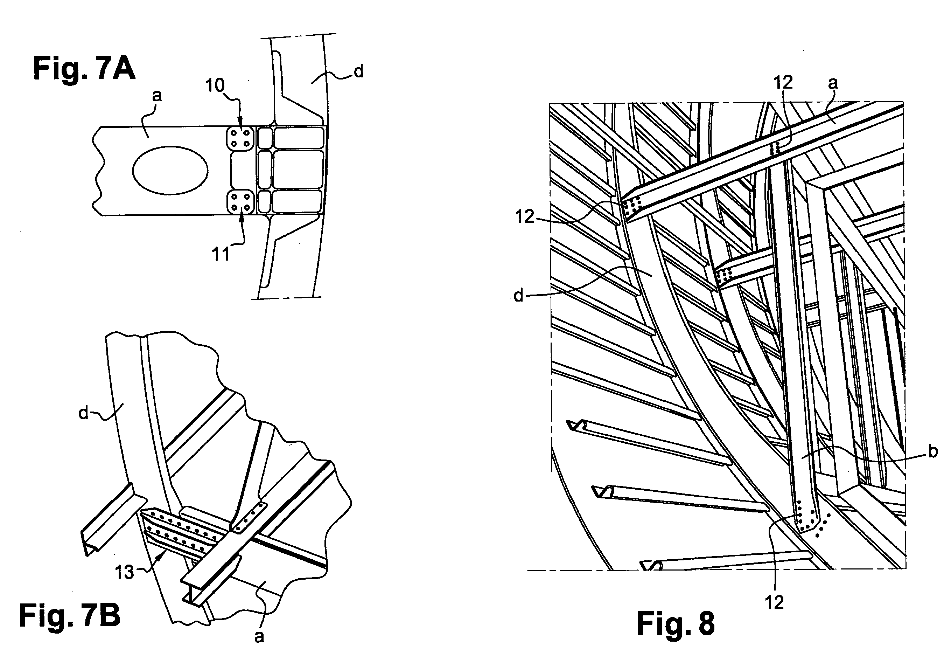

D'autres caractéristiques et avantages de l'invention seront apparents à la lecture de la description qui suit d'un exemple non limitatif de l'invention en référence aux dessins qui représentent:
en figure 1 : un tronçon de fuselage d'aéronef équipé de différents modes de réalisation d'éléments de cadres selon l'invention,
aux figures 2A et 2B: deux variantes d'éléments de cadre de fuselage selon un mode de réalisation particulier de l'invention;
en figure 3: l'élément de cadre de la figure 2 relié à un cadre supérieur, une traverse de plancher et un cadre inférieur;
en figure 4: une vue en perspective de l'assemblage de l'élément de cadre de la figure 3 avec le cadre supérieur et la traverse plancher;
en figure 5: une vue en perspective d'une section d'aéronef comprenant des éléments de cadre selon l'invention;
aux figures 6A et 6B: des vues de face respectivement d'un assemblage de traverses sur un élément de cadre de l'art antérieur et au moyen de l'élément de cadre de l'invention;
aux figures 7A et 7B: deux exemples de systèmes de fixation applicables à l'invention;
en figure 8: un troisième exemple de système de fixation applicable à l'invention.

L'invention est décrite dans le cadre de la réalisation d'éléments de cadres de fuselage d'aéronefs.

Selon la figure 1 représentant un tronçon de fuselage équipé d'éléments de cadres de l'invention, trois éléments de cadre de l'invention sont utilisés pour réaliser un cadre complet et les traverses d'un aéronef.

Le premier élément est un élément de cadre 101 dont la partie de traverse 101a forme une traverse cargo de l'aéronef et comportant un segment de cadre inférieur 101 b appelé cadre de fond de barque qui est incurvé.

Le deuxième élément est un élément de cadre 102 dont la partie de traverse 102a forme une traverse supérieure support des coffres à bagages de l'aéronef et comportant un segment de cadre supérieur 102b incurvé supportant le toit de l'appareil.

Le troisième élément 103 est un élément de cadre situé entre un cadre supérieur, une traverse plancher et un cadre inférieur ou traverse cargo.

Ils réalisent avec des segments de liaison 4 et 5 des cadres complets sur lesquels est assemblé le fuselage 200 de l'aéronef. La figure 1 représente deux cadres successifs, l'ensemble ou une grande partie des cadres de l'aéronef pouvant être réalisé avec les éléments de cadre de l'invention ensemble ou séparément selon la position et les dimensions des cadres concernés.

Les éléments de cadre 101, 102, 103 de fuselage d'aéronef de l'invention peuvent être constitué d'une pièce métallique, notamment une pièce usinée qui présente des caractéristiques mécaniques optimales ou être constitués d'une pièce intégrale en matériaux composites, les éléments de cadre étant alors réalisés par exemple avec une juxtaposition de plis de matériau composite imprégnés d'une résine qui sera polymérisée pour réaliser la pièce finie, les plis pouvant être des plis réalisant les segments de l'élément de cadre et croisés au niveau des parties de jonction ou des plis découpés formant l'ensemble des segments et superposés.

La figure 2A représente le troisième élément de cadre 103 constitué d'un cadre de profil général triangulaire qui comporte des parties de jonction aux angles du profil et qui est ajouré en son centre.

Selon la figure 2A les parties de jonction 2a, 2b, 2c sont à l'intérieur des sommets du triangle, sur la figure 2B, les parties de jonction 50, 51, 52 sont des excroissances dépassant des sommets du triangle.

L'élément de cadre 103 comporte une partie de traverse 1a, un tronçon de cadre 1 b et une bielle plancher 1 c réunis dans une seule et même pièce.

La figure 3 représente une section d'un cadre complet d'aéronef dans la zone de liaison du cadre supérieur et du cadre inférieur avec l'élément de cadre 103 de l'invention sur laquelle sont représentés un morceau d'une traverse plancher 3, un morceau de cadre inférieur 4 ou traverse cargo et un morceau de cadre supérieur 5.

Les parties de jonction 2a, 2b, 2c avec la traverse plancher 3, le cadre supérieur 5 et le cadre inférieur 4 réalisées aux angles de l'élément de cadre de l'invention sont des zones d'efforts moindres que les parties de jonctions antérieures du fait que l'élément de cadre 103 est un triangle réalisé en une pièce unique; la hauteur du profil de ces parties reste sensiblement constante par rapport aux segments 1 a, 1 b, 1 c reliant les parties de jonctions.

De même comme les jonctions de pièces sont réalisées dans des zones où les efforts sont moins importants, moins de fixations sont nécessaires pour réaliser les jonctions (triangle / cadre, triangle / traverse) et les pièces n'ont pas besoin d'intégrer des excroissances pour implanter davantage de fixations, les parties de jonction 2a, 2b, 2c peuvent être ainsi dépourvues d'excroissances de renfort.

La traverse plancher passager étant connectée avec la pièce triangle dans une zone où les efforts sont moins importants, cette traverse peut être réalisée avec une hauteur constante, ce qui réduit les coûts de fabrication.

Notamment la traverse plancher 3 reste de hauteur 1 constante sans renflements au niveau de ses jonctions avec l'élément de cadre comme représenté en figure 6B alors que la traverse a de l'art antérieur représentée à la figure 6A comportait une partie renflée l₂ dans sa partie a₂ entre la bielle b et la jonction c sur le cadre d par rapport à sa hauteur l₁ dans sa partie centrale a₁.

Enfin, toujours selon la figure 3 l'élément de cadre de l'invention comporte des nervures de renfort 7 formant des raidisseurs qui accroissent sa rigidité dans les zones de transmission d'efforts.

Selon la figure 4 représentant les jonctions de l'élément de cadre 103 de l'invention avec la traverse plancher 3 et le cadre supérieur 5, il est possible d'assembler directement les pièces précitées sans éléments intermédiaires.

La traverse plancher peut notamment être une poutre à profil en I dont les branches horizontales sont supprimées d'un côté de la poutre dans la zone de jonction avec l'élément de cadre de l'invention pour réaliser une liaison à plat ou par recouvrement.

Il est aussi possible d'utiliser des liaisons de l'art antérieur comportant des maillons d'attache supérieur 10 et inférieur 11 telles que représentées à la figure 7A entre une traverse a et un cadre d de l'art antérieur, des liaisons par éclissage 13 comme représenté à la figure 7B pour ces mêmes pièces ou des liaisons boulonnées ou rivetées 12 comme représenté à la figure 8 pour une liaison antérieure avec une traverse a, un cadre d et une bielle b.

Comme représenté à la figure 5 représentant une partie de l'aéronef, les éléments de cadre 1 c de l'invention prolongent les parties de cadres supérieures 5 jusqu'aux cadres inférieurs 4 et leurs segments 1 b formant l'hypoténuse du triangle sont courbes en sorte d'épouser la courbure de la peau 6 du fuselage de l'aéronef.

La traverse 3, les éléments de cadre 4 inférieur et les éléments de cadre supérieur 5 présentent la même hauteur dans leur zone de jonction avec l'élément de cadre 103 de l'invention formant une pièce triangle intégrale qu'en dehors de cette zone de jonction ce qui simplifie leur fabrication et en diminue le coût.

Ainsi, les parties reliées à l'élément de cadre triangle de l'invention présentent la même hauteur dans leur zone de jonction avec la pièce triangle intégrale qu'en dehors de la zone de jonction, en particulier coté traverse plancher et coté cadre inférieur ou traverse cargo, la partie de jonction triangulaire inférieure 2c pouvant en particulier être dimensionnée pour recevoir un cadre inférieur et une traverse cargo séparés.

De même que le triangle intégral 103 est installé en lieu et place des pièces assemblées (cadre, bielle, traverse), les pièces intégrales 101 et 102 comprenant un arc et une corde monobloc sont installées dans les zones des traverses cargo ou d'interface avec les boîtes à chapeau (coffres à bagages) en partie supérieure de l'aéronef ce qui réduit le nombre d'assemblages et rend ces parties plus rigides.

D'une manière générale, ce principe peut être appliqué pour intégrer une bielle à des éléments structuraux adjacents. Les éléments de cadre 101 et 102 présentent les mêmes avantages que l'élément de cadre 103 et notamment en mode de réalisation particulier intègrent une ou plusieurs bielles 1c comme représenté en figure 1 pour l'élément de cadre inférieur 101.

Les éléments de cadre des l'invention peuvent être également être réalisés avec des éléments de cadre à corps creux tels que des profils creux.

L'invention n'est pas limitée à l'exemple représenté et notamment d'autres principes de jonction entre les éléments de cadre de l'invention avec les reste des segments de cadre peuvent être envisagés comme la soudure, le collage, le sertissage, des fixations par excentriques, des articulation, des encastrements.

De même les jonctions peuvent être des jonction traverse/cadre par recouvrement, des jonctions manillée, des jonctions bord à bord.

## Revendications

1. Cadre de fuselage d'aéronef comportant un fond de barque (101 b) et un élément de cadre supérieur (102b) et comportant entre le fond de barque et l'élément de cadre supérieur des éléments de cadre (103) supports de traverses plancher, **caractérisé en ce que**, les éléments de cadre (103) supports de traverses plancher comportent une partie de traverse (1a) et un tronçon de cadre (1b) et une bielle (1c) réunis dans une seule et même pièce, la partie de traverse, le tronçon de cadre et la bielle formant les trois côtés d'une seule et même pièce formant un triangle intégral.

2. Cadre de fuselage d'aéronef selon la revendication 1 **caractérisé en ce que** les éléments de cadre supports de traverses plancher sont constitués d'une pièce métallique.

3. Cadre de fuselage d'aéronef selon la revendication 1 ou 2 **caractérisé en ce que** les éléments de cadre supports de traverses plancher sont constitués d'une pièce usinée.

4. Cadre de fuselage d'aéronef selon la revendication 1 **caractérisé en ce que** les éléments de cadre supports de traverses plancher sont constitués de pièces intégrales en matériaux composites.

5. Cadre de fuselage d'aéronef selon l'une quelconque des revendications 1 à 4 **caractérisé en ce que** les éléments de cadre supports de traverses plancher comportent des parties de jonction (2a, 2b, 2c, 50, 51, 52) aux angles de leur profil général triangulaire.

6. Cadre de fuselage d'aéronef selon la revendication 5 pour lequel, les parties de jonction étant des zones d'efforts moindres, la hauteur du profil de ces parties reste constante par rapport aux segments (1a, 1b, 1c) reliant les parties de jonctions.

7. Cadre de fuselage d'aéronef selon l'une quelconque des revendications précédentes pour lequel le triangle intégral des éléments de cadre supports de traverses plancher comporte un segment (1b) courbe en sorte d'épouser la courbure de la peau de l'aéronef.

8. Ensemble cadre de fuselage d'aéronef et traverses comportant un cadre selon l'une quelconque des revendications précédentes pour lequel l'élément de cadre supérieur (102b) est un segment de cadre supérieur (102b) incurvé supportant le toit de l'appareil partie d'un élément de cadre (102) comportant une partie de traverse (102a) formant une traverse supérieure support de coffres à bagages de l'aéronef et ledit segment de cadre supérieur (102b) incurvé.

9. Ensemble cadre de fuselage d'aéronef et traverses comportant un cadre selon l'une quelconque des revendications précédentes pour lequel le fond de barque est un segment de cadre inférieur (101b) incurvé partie d'un élément de cadre (101) comportant une partie de traverse (101 a) formant une traverse cargo de l'aéronef et ledit segment de cadre inférieur (101b) incurvé.

10. Ensemble cadre de fuselage d'aéronef et traverses comportant un cadre selon la revendication 8 ou 9 pour lequel le cadre comprend des éléments de cadre supérieur (5) et cadre inférieur (4) réalisés aux angles des éléments de cadre support de traverses plancher.

11. Ensemble cadre de fuselage d'aéronef et traverses selon l'une quelconque des revendications précédentes **caractérisé en ce que** l'un au moins de la traverse plancher (3), le cadre inférieur (4) et le cadre supérieur (5) est de hauteur (I) constante sans renflements au niveau de ses jonctions avec l'élément adjacent.

12. Aéronef comportant au moins un cadre de fuselage d'aéronef et traverses selon l'une quelconque des revendications 8 à 11.

## Patentansprüche

1. Luftfahrzeug-Rumpfrahmen, der ein Spantunterteil (101b) und ein oberes Rahmenelement (102b) aufweist, und zwischen dem Spantunterteil und dem oberen Rahmenelement Bodenquerträger stützende Rahmenelemente (103) aufweist, **dadurch gekennzeichnet, dass** die Bodenquerträger stützenden Rahmenelemente (103) einen Querträgerteil (1a) und einen Rahmenabschnitt (1b) und eine Stange (1c) im gleichen Bauteil vereint **aufweisen**, wobei der Querträgerteil, der Rahmenabschnitt und die Stange die drei Seiten des gleichen Bauteils formen, das ein integrales Dreieck formt.

2. Luftfahrzeug-Rumpfrahmen nach Anspruch 1, **dadurch gekennzeichnet, dass** die Bodenquerträger stützenden Rahmenelemente aus einem metallischen Bauteil bestehen.

3. Luftfahrzeug-Rumpfrahmen nach Anspruch 1 oder 2, **dadurch gekennzeichnet, dass** die Bodenquerträger stützenden Rahmenelemente aus einem maschinell bearbeiteten Bauteil bestehen.

4. Luftfahrzeug-Rumpfrahmen nach Anspruch 1, **dadurch gekennzeichnet, dass** die Bodenquerträger stützenden Rahmenelemente aus integralen Bauteilen aus Verbundmaterialien bestehen.

5. Luftfahrzeug-Rumpfrahmen nach einem der Ansprüche 1 bis 4, **dadurch gekennzeichnet, dass** die Bodenquerträger stützenden Rahmenelemente Verbindungsteile (2a, 2b, 2c, 50, 51, 52) an den Ecken ihres allgemeinen dreieckigen Profils aufweisen.

6. Luftfahrzeug-Rumpfrahmen nach Anspruch 5, wobei, da die Verbindungsteile Zonen geringerer Kräfte sind, die Höhe des Profils dieser Teile bezüglich der die Verbindungsteile verbindenden Segmente (1a, 1b, 1c) konstant bleibt.

7. Luftfahrzeug-Rumpfrahmen **nach einem der** vorhergehenden Ansprüche, wobei das integrale Dreieck der Bodenquerträger stützenden Rahmenelemente ein gekrümmtes Segment (1b) aufweist, um sich an die Krümmung der Haut des Luftfahrzeugs anzupassen.

8. Einheit aus einem Luftfahrzeug-Rumpfrahmen und Querträgern, die einen Rahmen nach einem der vorhergehenden Ansprüche aufweist, wobei das obere Rahmenelement (102b) ein das Dach des Flugzeugs tragendes gebogenes oberes Rahmensegment (102b) ist, das Teil eines Rahmenelements (102) ist, das einen einen Gepäckräume des Luftfahrzeugs stützenden oberen Querträger formenden Querträgerteil (102a) und das gekrümmte obere Rahmensegment (102b) aufweist.

9. Einheit aus einem Luftfahrzeug-Rumpfrahmen und Querträgern, die einen Rahmen nach einem der vorhergehenden Ansprüche aufweist, wobei das Spantunterteil ein gekrümmtes unteres Rahmenteil (101b) ist, das Teil eines Rahmenelements (101) ist, das einen einen Frachtraumquerträger des Luftfahrzeugs formenden Querträgerteil (101a) und das gekrümmte untere Rahmensegment (101b) aufweist.

10. Einheit aus einem Luftfahrzeug-Rumpfrahmen und Querträgern, die einen Rahmen nach Anspruch 8 oder 9 aufweist, wobei der Rahmen obere (5) und untere Rahmenelemente (4) aufweist, die an den Ecken der Bodenquerträger stützenden Rahmenelemente hergestellt sind.

11. Einheit aus einem Luftfahrzeug-Rumpfrahmen und Querträgern nach einem der vorhergehenden Ansprüche, **dadurch gekennzeichnet, dass** mindestens einer von dem Bodenquerträger (3), dem unteren Rahmen (4) und dem oberen Rahmen (5) eine konstante Höhe (I) ohne Ausbauchungen im Bereich seiner Verbindungen mit dem benachbarten Element aufweist.

12. Luftfahrzeug, das mindestens eine Einheit aus einem Luftfahrzeug-Rumpfrahmen und Querträgern nach einem der Ansprüche 8 bis 11 aufweist.

## Claims

1. Aircraft fuselage frame comprising a bottom structure base (101b) and an upper frame element (102b) and comprising, between the base of the bottom structure and the upper frame element, frame elements (103) for supporting floor cross-beams, **characterized in that** the frame elements (103) for supporting floor cross-beams comprise a cross-beam portion (1a) and a frame section (1b) and a strut (1c) all contained in one and the same part, with the cross-beam portion , the frame section and the strut forming the three sides of one and the same part, forming a one-piece triangle.

2. Aircraft fuselage frame according to Claim 1, **characterized in that** the frame elements for supporting floor cross-beams consist of a metal part.

3. Aircraft fuselage frame according to Claim 1 or 2, **characterized in that** the frame elements for supporting floor cross-beams consist of a machined part.

4. Aircraft fuselage frame according to Claim 1, **characterized in that** the frame elements for supporting floor cross-beams consist of one-piece parts made of composite materials.

5. Aircraft fuselage frame according to any one of Claims 1 to 4, **characterized in that** the frame elements for supporting floor cross-beams comprise connecting portions (2a, 2b, 2c, 50, 51, 52) at the corners of their generally triangular profile.

6. Aircraft fuselage frame according to Claim 5, in which, the connecting portions being regions of lower stress, the height of the profile of these portions remains constant with respect to the segments (1a, 1b, 1c) linking the connecting portions.

7. Aircraft fuselage frame according to any one of the preceding claims, in which the one-piece triangle of the frame elements for supporting floor cross-beams comprises a segment (1b) which is curved so as to match the curvature of the skin of the aircraft.

8. Aircraft fuselage frame and cross-beam assembly comprising a frame according to any one of the preceding claims, in which the upper frame element (102b) is a curved upper frame segment (102b), supporting the roof of the aircraft, which is part of a frame element (102) comprising a cross-beam portion (102a) forming an upper cross-beam for supporting luggage bins of the aircraft and said curved upper frame segment (102b).

9. Aircraft fuselage frame and cross-beam assembly comprising a frame according to any one of the preceding claims, in which the base of the bottom structure is a curved lower frame segment (101b) which is part of a frame element (101) comprising a cross-beam portion (101a) forming a cargo cross-beam of the aircraft and said curved lower frame segment (101b).

10. Aircraft fuselage frame and cross-beam assembly comprising a frame according to Claim 8 or 9, in which the frame comprises upper frame (5) and lower frame (4) elements realized at the corners of the frame elements for supporting floor cross-beams.

11. Aircraft fuselage frame and cross-beam assembly according to any one of the preceding claims, **characterized in that** at least one of the floor cross-beam (3), the lower frame (4) and the upper frame (5) is of constant height (1) with no bulges at the connections thereof with the adjacent element.

12. Aircraft comprising at least one aircraft fuselage frame and cross-beam assembly according to any one of Claims 8 to 11.
